# EUROPÄISCHE PATENTSCHRIFT

(11) **EP 3 429 886 B1**
(45) Veröffentlichungstag und Bekanntmachung des Hinweises auf die Patenterteilung: **20.07.2022**
(21) Anmeldenummer: 17704663.8
(22) Anmeldetag: 06.02.2017
(51) Int. Cl.: B60L 7/24, B60L 7/26, B60L 7/18, B60T 13/58, B60T 1/10, B60L 15/20, B60L 3/10, B60T 8/17, B60T 7/20, B60L 15/38, B60W 30/18

(54) **ELEKTRONISCHES BREMSSYSTEM FÜR EIN ANHÄNGERFAHRZEUG**
ELECTRONIC BRAKING SYSTEM FOR A TRAILER VEHICLE
SYSTÈME DE FREINAGE ÉLECTRONIQUE POUR VÉHICULE À REMORQUE

(30) Priorität: 18.03.2016 DE 102016003356
(43) Veröffentlichungstag der Anmeldung: 23.01.2019
(73) Patentinhaber: ZF CV Systems Europe BV, 1170 Brussels (BE)
(72) Erfinder: RISSE, Rainer, 30982 Pattensen-Reden (DE); STENDER, Axel, 31787 Hameln (DE)
(74) Vertreter: Koschnitzki, Thomas
(86) Internationale Anmeldenummer: PCT/EP2017/000157
(87) Internationale Veröffentlichungsnummer: WO 2017/157502

(56) Entgegenhaltungen:
- EP-A1- 2 853 452
- EP-A2- 2 039 577
- WO-A2-2008/086087
- DE-A1-102013 204 913
- US-A1- 2007 193 795
- US-A1- 2008 174 174

## Beschreibung

Die Erfindung betrifft ein elektronisches Bremssystem für ein Anhängefahrzeug mit einer Rekuperations-Einrichtung und zur Steuerung einer Betriebsbremse.

Moderne Nutzfahrzeuge sind mit einer pneumatischen Bremsanlage ausgestattet, der ein elektronisches Bremssystem zugeordnet ist. Dies gilt sowohl für Zugfahrzeuge als auch für Anhängefahrzeuge. Möglich ist auch die Kombination aus hydraulischer Bremsanlage und elektronischem Bremssystem. Nur zur Vereinfachung wird nachfolgend ausschließlich auf eine pneumatische Bremsanlage Bezug genommen. Eine Beschränkung auf diesen Bremsanlagentyp soll damit nicht verbunden sein.

Das elektronische Bremssystem weist ein Steuergerät auf, welches auch als ECU (Electronic Control Unit) bezeichnet wird. Die ECU steuert eine Betriebsbremse in Abhängigkeit von der Position eines Bremspedals. Konkret wird über die ECU ein bestimmter Bremsdruck oder ein bestimmtes Bremsmoment an der Betriebsbremse eingestellt durch Ansteuerung elektromagnetischer Ventile.

Zugfahrzeuge können neben Betriebsbremse und Feststellbremse eine Zusatzbremse oder Dauerbremse aufweisen. Insbesondere handelt es sich dabei um einen sogenannten Retarder, in dem kinetische Energie hydraulisch oder elektromagnetisch in Wärme umgesetzt wird. Die ECU steuert auch den Retarder an, entweder in Abhängigkeit von der Stellung des Bremspedals oder von der Stellung eines zusätzlichen Bedienhebels. Eine Dauerbremsanlage im Sinne einer Zusatzbremse für einen Fahrzeugverband aus Zugfahrzeug und Anhängefahrzeug ist in der EP 1 291 258 A1 offenbart.

Bekannt ist auch die Verwendung von Rekuperations-Einrichtungen in Fahrzeugen. Bremsenergie wird umgewandelt in elektrische Energie und in dieser Form gespeichert. Hierzu weist die Rekuperations-Einrichtung zumindest einen elektrischen Generator auf. Zusätzlich sind ein Speicher für elektrische Energie und insbesondere auch ein elektrischer Motor vorhanden. Diese können Teile der Rekuperations-Einrichtung sein oder als eigenständige Fahrzeugteile mit der Rekuperations-Einrichtung verbunden sein. Einen Fahrzeugverbund aus Zugfahrzeug und Anhängefahrzeug, mit Hybrid-Antriebstechnik und Rekuperations-Einrichtung im Zugfahrzeug, zeigt die US 8,311,693 B2.

Eine Rekuperations-Einrichtung in einem Anhängefahrzeug zeigt die US 2006/0000207 A1. Die Bremsenergie treibt eine Hydraulikpumpe an, mit der ein Hydraulikkolben bewegt und so ein Luftvolumen als Energiespeicher verdichtet wird. Bei Bedarf wird die Energie dem Speicher wieder entnommen, der Hydraulikkolben bewegt sich durch die Druckluft zurück und die hydraulische Flüssigkeit treibt die Hydraulikpumpe im Motorbetrieb an.

Ein Fahrzeugverbund aus Zugfahrzeug und Anhängefahrzeug zeigt die DE 10 2010 042 907 A1. Im Anhängefahrzeug ist eine Rekuperations-Einrichtung mit Generator/Motor und Energiespeicher zur Entlastung einer Betriebsbremse vorgesehen. Außerdem soll die Umwandlung der kinetischen Energie mit einer Kraft, die vom Zugfahrzeug während des Beschleunigungsvorgangs auf das Anhängefahrzeug ausgeübt wird, korrelieren.

Die US 2007/0193795 A1 offenbart einen hybriden Antriebsstrang für einen Anhänger. Ein Motor bringt dabei ein Drehmoment auf ein Rad des Anhängers auf. In einer Ausführungsform ist ein erster Radmotor/-generator an ein erstes angetriebenes Rad angekoppelt, um ein Antriebsmoment auf den Boden zu übertragen, und ist ein zweiter Radmotor/-generator an ein zweites angetriebenes Rad angekoppelt, um ein Antriebsmoment auf den Boden zu übertragen. Über die Radmotoren/-generatoren wird kinetische Energie des bewegten Anhängers in elektrische Energie umgewandelt. In einer weiteren Ausführungsform wird eine Antriebsmotorachse elektrisch oder hydraulisch durch ein Energiespeichersystem mit Energie versorgt. Angetriebene Räder sind jeweils mit einer Radbremse versehen, wobei jede Radbremse einzeln ansteuerbar ist, um ein Moment zu übertragen, wenn Betriebsbedingungen einem regenerativen Bremsen nicht zuträglich sind.

Die WO 2008/086087 A2 offenbart ein regeneratives Bremssystem an einem Anhänger. Über ein Anhänger-Verbindungselement wird ein Drehmomentsensor ausgewertet. Ein Massensensor bestimmt eine Anhängermasse. Basierend auf der Anhängermasse kann ein durch einen Motor aufzubringendes Drehmoment berechnet werden, das benötigt wird, um eine Vorwärtsbewegung des Anhängers zu unterstützen, und die Bremsen dabei unterstützt werden, ein angemessenes Maß an Verzögerung bereitzustellen.

Die US 2008/0174174 offenbart ein Bremsregenerations- und Vortriebssystem für einen passiven Anhänger. Ein Motor/Generator erzeugt bei einer Bremsregeneration Energie und bringt während eines Beschleunigungsmodus ein Drehmoment auf Räder des Anhängers auf.

Die DE 10 2013 204 913 A1 offenbart eine Rekuperation bei einem Fahrzeug mit einem Elektromotor, das in einem Anhängerbetrieb betrieben wird. In einem Generatorbetrieb eines Motors/Generators wird eine rekuperierende Achse des Fahrzeugs verzögert.

Die EP 2 853 452 A1 offenbart ein Verfahren zur Steuerung eines elektronischen Bremssystems in einem Fahrzeug mit einer Antiblockierfunktion, wobei Signale eines Achslastsensors ausgewertet werden und die Antiblockerfunktion von den Signalen des Achslastsensors um zwischen einem Standardmodus und einem Geländemodus, wobei die Antiblockierfunktion im Geländemodus einen größeren Schlupf zulässt als im Standardmodus.

Die EP 2 039 577 A2 offenbart ein Zugfahrzeug für ein elektrisches Fahrzeug.

Aufgabe der vorliegenden Erfindung ist die sinnvolle Einbeziehung der Rekuperations-Einrichtung im Anhängefahrzeug bei Betätigung einer Bremse im Zugfahrzeug. Insbesondere handelt es sich bei der betätigten Bremse im Zugfahrzeug um eine Dauerbremse oder Zusatzbremse, etwa nach Art eines Retarders.

Ein nicht beanspruchtes elektronisches Bremssystem ist für ein Anhängefahrzeug mit einer Rekuperations-Einrichtung und zur Steuerung einer Betriebsbremse vorgesehen. Dabei steuert das elektronische Bremssystem bei Anforderung einer Verzögerung durch ein Zugfahrzeug die Rekuperations-Einrichtung des Anhängefahrzeugs an, insbesondere aufgrund der Betätigung einer Zusatzbremse im Zugfahrzeug. In die Steuerung der Betriebsbremse des Anhängefahrzeugs wird das Bremsmoment der Rekuperations-Einrichtung einbezogen. Bei der Zusatzbremse im Zugfahrzeug handelt es sich vorzugsweise um einen sogenannten Retarder.

Das nicht beanspruchte elektronische Bremssystem weist wenigstens eine Antiblockier-Regelung oder eine Stabilitätsregelung auf. Die Rekuperations-Einrichtung bleibt passiv oder wird ausgeschaltet, wenn die Antiblockier-Regelung oder die Stabilitätsregelung aktiv sind. Dadurch bleibt die hohe Dynamik der genannten Regelungen erhalten.

Die Rekuperations-Einrichtung wird bei Ansteuerung nur ein- oder ausgeschaltet. Es erfolgt keine Variation des Bremsmoments der Rekuperations-Einrichtung. Dies erleichtert die Regelung insgesamt erheblich und ist gut praktikabel, wenn das Bremsmoment der Rekuperations-Einrichtung im Verhältnis zum maximalen Bremsmoment der Betriebsbremse klein genug ist.

Bei angesteuerter Rekuperations-Einrichtung wird dessen Bremsmoment an das elektronische Bremssystem zurückgemeldet, und das elektronische Bremssystem führt die Ansteuerung der Betriebsbremse in Abhängigkeit von der Anforderung der Verzögerung und vom zurückgemeldeten Bremsmoment aus und variiert sie. Das elektronische Bremssystem des Anhängefahrzeugs erhält vom elektronischen Bremssystem des Zugfahrzeugs eine Verzögerungsanforderung, insbesondere bei Betätigung der Zusatzbremse des Zugfahrzeugs. Daraufhin wird die Rekuperations-Einrichtung des Anhängefahrzeugs zum Bremsen angesteuert. Die Rekuperations-Einrichtung meldet ein Bremsmoment an das elektronische Bremssystem zurück, welches daraufhin die Betriebsbremse des Anhängefahrzeugs ansteuert und dabei das zurückgemeldete Bremsmoment der Rekuperations-Einrichtung berücksichtigt.

Das elektronische Bremssystem weist ein elektronisches Steuergerät (ECU) auf, und die Rekuperations-Einrichtung weist eine ECU auf, wobei die beiden ECUs über eine Datenverbindung miteinander verbunden sind, insbesondere über einen CAN-Bus. Eine schnelle und sichere Ansteuerung und ein sicherer Austausch von Informationen ist dadurch gewährleistet.

Gegenstand der Erfindung ist ein elektronisches Bremssystem mit den Merkmalen des Anspruchs 1. Das elektronische Bremssystem ist zur Steuerung einer Betriebsbremse in einem Anhängefahrzeug mit Rekuperations-Einrichtung vorgesehen und steuert bei Anforderung einer Verzögerung durch ein Zugfahrzeug die Rekuperations-Einrichtung und zusätzlich die Betriebsbremse an. Die Anforderung einer Verzögerung erfolgt insbesondere aufgrund der Betätigung einer Zusatzbremse im Zugfahrzeug. Die Steuerung der Rekuperations-Einrichtung erfolgt unabhängig vom Bremsmoment der Betriebsbremse, indem die Rekuperations-Einrichtung bei Ansteuerung nur ein- oder ausgeschaltet wird.

Nach einem weiteren Gedanken der Erfindung weist das elektronische Bremssystem wenigstens eine Antiblockier-Regelung oder eine Stabilitätsregelung auf. Die Rekuperations-Einrichtung bleibt passiv oder ausgeschaltet, wenn die Antiblockier-Regelung oder Stabilitäts-Regelung aktiv sind.

Gemäss der Erfindung wird die Rekuperations-Einrichtung bei Ansteuerung nur ein- oder ausgeschaltet. Vorzugsweise findet keine darüber hinausgehende Variation des Bremsmoments der Rekuperations-Einrichtung statt. Nach einem weiteren Gedanken der Erfindung ist vorgesehen, dass das elektronische Bremssystem ein elektronisches Steuergerät (ECU) aufweist, und dass auch die Rekuperations-Einrichtung eine ECU aufweist, wobei die beiden ECUs über eine Datenverbindung verbunden sind, insbesondere über einen CAN-Bus.

Nach einem weiteren Gedanken der Erfindung ist die Rekuperations-Einrichtung in einer Bremsphase aktiv, nämlich bei Ansteuerung der Betriebsbremse mit einem Steuerdruck oberhalb eines ersten Schwellwerts, vorzugsweise von mindestens 0,7 bar. Insbesondere ist die Rekuperations-Einrichtung auch in einer Bremsbereitschaftsphase aktiv, nämlich bei Ansteuerung der Betriebsbremse mit einem Steuerdruck unterhalb des ersten Schwellwerts und oberhalb eines niedrigeren zweiten Schwellwerts von vorzugsweise 0,3 bar. Die Bremsbereitschaftsphase ist ein Merkmal moderner elektronischer Bremssysteme. Unter bestimmten Bedingungen trifft das elektronische Bremssystem vorbereitende Maßnahmen zum Bremsen, etwa das Verringern des Abstands zwischen Bremsbelägen und Bremsscheiben. Vorzugsweise handelt es sich nicht um Bedingungen, die zur Aktivierung einer Antiblockier-Regelung oder Stabilitäts-Regelung führen.

Nach einem weiteren Gedanken der Erfindung wird das Bremsmoment der Rekuperations-Einrichtung vollständig in die Steuerung der Betriebsbremse mit einbezogen, so dass ein resultierendes Bremsmoment der Betriebsbremse ein angefordertes Gesamtbremsmoment abzüglich des Rekuperations-Bremsmoments ist. Das heißt, das Rekuperations-Bremsmoment ist ein Offset der Bremsdruckregelung für die Betriebsbremse. Vom Zugfahrzeug wird an das Anhängefahrzeug eine Anforderung für einen bestimmten Bremsdruck übergeben. Dieser Bremsdruck (und das daraus resultierende Bremsmoment) wird für die Betriebsbremse reduziert um das Rekuperations-Bremsmoment, so dass im Ergebnis das Anhängefahrzeug das geforderte Bremsmoment aufbringt.

Gegenstand der Erfindung ist auch ein Anhängefahrzeug mit einem elektronischen Bremssystem nach einem der voranstehenden Ansprüche. Dabei kann die Rekuperations-Einrichtung einen elektrischen Generator und einen elektrischen Energiespeicher aufweisen. Die gespeicherte Energie kann zum Beispiel für den Betrieb eines Kühlaggregats oder anderen Verbrauchern an Bord des Anhängefahrzeugs verwendet werden. Entsprechend handelt es sich bei dem Anhängefahrzeug vorzugsweise um ein Kühlfahrzeug.

Gegenstand der Erfindung ist außerdem ein Fahrzeugverband mit Zugfahrzeug und erfindungsgemäßem Anhängefahrzeug.

Schließlich ist ein Beispiel für die Erfindung ein Steuergerät für ein erfindungsgemäßes elektronisches Bremssystem, wobei das Steuergerät eine Steuerung für eine Rekuperations-Einrichtung aufweist, derart, dass bei Anforderung einer Verzögerung durch ein Zugfahrzeug die Rekuperations-Einrichtung angesteuert wird und insbesondere ein Bremsmoment der Rekuperations-Einrichtung in die Steuerung der Betriebsbremse mit einbezogen wird. Die Steuerung für die Rekuperations-Einrichtung kann in das Steuergerät integriert sein oder als zusätzliches Steuergerät angeschlossen oder über eine Datenleitung verbunden sein.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:

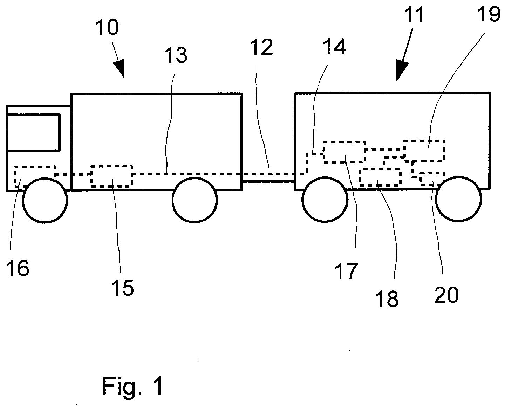

Fig. 1 einen Fahrzeugverband mit Zugfahrzeug und Anhängefahrzeug,
Fig. 2 wesentliche Bestandteile eines elektronischen Bremssystems im Anhängefahrzeug mit Rekuperations-Einrichtung, in einer ersten Variante,
Fig. 3 wesentliche Bestandteile eines elektronischen Bremssystems im Anhängefahrzeug mit Rekuperations-Einrichtung, in einer zweiten Variante,
Fig. 4 eine Grafik mit Kurven zur Darstellung von unterschiedlichen Verzögerungen.

Ein Fahrzeugverbund besteht hier aus einem Zugfahrzeug 10 und einem Anhängefahrzeug 11. Letzteres ist ein Kühlfahrzeug mit elektrisch betriebenem Kühlaggregat (nicht gezeigt).

Die Fahrzeuge 10, 11 sind in der üblichen Weise mechanisch miteinander verbunden. Zusätzlich besteht eine Datenverbindung 12 nach ISO 11992 zwischen einem CAN-Bus 13 des Zugfahrzeugs 10 und einem CAN-Bus 14 des Anhängefahrzeugs 11.

Beide Fahrzeuge 10, 11 sind mit einer pneumatischen Bremsanlage und einem elektronischen Bremssystem ausgestattet. Entsprechend bestehen pneumatische Verbindungen zwischen den beiden Fahrzeugen 10, 11 für Steuerdruck und Vorratsdruck (nicht gezeigt).

Das elektronische Bremssystem im Zugfahrzeug 10 weist ein elektronisches Steuergerät (ECU) 15 auf, welches an den CAN-Bus 13 angeschlossen ist. Im Zugfahrzeug 10 ist neben einer nicht gezeigten Betriebsbremse als Zusatzbremse ein Retarder 16 vorgesehen, der über den CAN-Bus 13 durch das Steuergerät 15 ansteuerbar ist.

Das elektronische Bremssystem des Anhängefahrzeugs 11 weist ein elektronisches Steuergerät (ECU) 17 und eine Rekuperations-Einrichtung 18 auf. Letztere enthält hier mindestens einen Generator oder Motor/Generator. Für die Rekuperations-Einrichtung 18 ist ein eigenes Steuergerät (ECU) 19 vorgesehen. Die von der Rekuperations-Einrichtung erzeugte elektrische Energie wird in einer Batterie 20 gespeichert. Die ECU 19 ist über den CAN-Bus 14 mit der ECU 17 verbunden. Rekuperations-Einrichtung 18 und Batterie (Akkumulator) 20 sind über Datenleitungen an die ECU 19 angeschlossen. Vorhandene Starkstromleitungen sind nicht gezeigt.

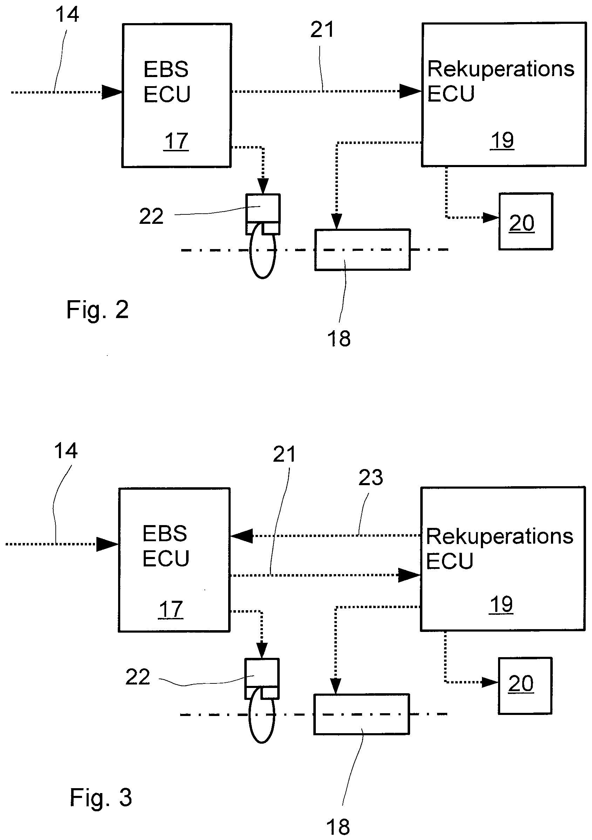

In der ersten Variante gemäß Fig. 2 arbeitet das elektronische Bremssystem des Anhängefahrzeugs 11 wie folgt:
Über den CAN-Bus erhält die ECU 17 die Anforderung zum Bremsen. Ausgelöst wird die Anforderung durch Betätigung des Retarders 16 im Zugfahrzeug 10, etwa durch einen besonderen Bedienhebel im Zugfahrzeug 10. Der Bedienhebel ist mit der ECU 15 verbunden, die den Retarder 16 ansteuert und zugleich eine korrespondierende Bremsanforderung an die ECU 17 des Anhängefahrzeugs 11 sendet.

Die Bremsanforderung für die ECU 17 enthält ein bestimmtes Bremsmoment bzw. einen hierzu korrelierenden Bremsen-Steuerdruck. Die ECU 17 sendet ein Signal 21 an die ECU 19 zur Aktivierung des Generators in der Rekuperations-Einrichtung 18. Insbesondere wird der Generator aus einem Aus-Zustand in einen Ein-Zustand geschaltet.

Die Übergabe des Signals 21 erfolgt digital auf einer Datenverbindung. Vorzugsweise handelt es sich bei der Datenverbindung um den CAN-Bus.

Parallel dazu steuert die ECU 17 Betriebsbremsen 22 des Anhängefahrzeugs 11 mit einem bestimmten Bremsen-Steuerdruck an, so dass ein korrelierendes Bremsmoment wirksam ist. Das zuletzt genannte Bremsmoment und ein im Generator wirksames Rekuperations-Bremsmoment summieren sich zu einem GesamtBremsmoment auf, welches der vom Zugfahrzeug 10 übermittelten Brems-Anforderung entspricht.

Die ECU 17 steuert die Betätigung der Betriebsbremsen 22 durch Variation eines pneumatischen Bremsen-Steuerdrucks. Je nach Steuerdruck liegen unterschiedliche Phasen vor, nämlich eine Bremsphase für einen Steuerdruck > 0,7 bar und eine Bremsbereitschaftsphase für einen Steuerdruck > 0,3 bar und < = 0,7 bar. Bei einem Steuerdruck von mehr als 0,3 bar wird auch der Generator der Rekuperations-Einrichtung 18 aktiviert. Hierzu erhält die ECU 19 von der ECU 17 entweder Informationen über den Steuerdruck oder gleich die Anweisung zur Aktivierung des Generators.

In der ECU 17 sind unter anderem Algorithmen für eine Antiblockier-Regelung und eine Stabilitäts-Regelung der Betriebsbremsen 22 hinterlegt. Bei Aktivierung einer dieser Regelungen wird der Generator deaktiviert bzw. bleibt der Generator inaktiv.

Die ECU 17 berücksichtigt bei der Berechnung des Bremsen-Steuerdrucks das Bremsmoment der Rekuperations-Einrichtung 18. Im einfachsten Fall wird der Bremsen-Steuerdruck um einen Festwert (korrespondierend zum Bremsmoment der Rekuperations-Einrichtung) reduziert.

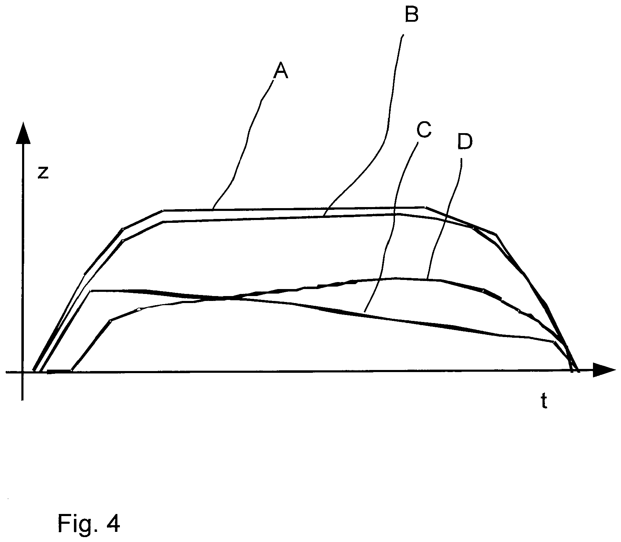

Eine zweite Variante des elektronischen Bremssystems wird anhand der Figuren 3 und 4 erläutert:
Der Aufbau des Systems gemäß Fig. 3 entspricht dem Aufbau gemäß Fig. 2. Unterschiede bestehen im Ablauf der Kommunikation zwischen den ECU 17 und 19 und in der Berechnung des Bremsen-Steuerdrucks.

Eine von der Retarder-Betätigung im Zugfahrzeug 10 ausgelöste Bremsanforderung für das Anhängefahrzeug 11 gelangt über den CAN-Bus 14 zur ECU 17. Die Brems-Anforderung ist in Fig. 4 als Verzögerung z über der Zeit t aufgetragen, siehe Kurve A (angeforderte Verzögerung). Die Betriebsbremsen 22 und die Rekuperations-Einrichtung 18 wirken zusammen und bremsen das Anhängefahrzeug 11 im Sinne der angeforderten Verzögerung ab, siehe Kurve B (Gesamtverzögerung Anhängefahrzeug).

Im vorliegenden Beispiel steigt die angeforderte Verzögerung A im Zeitverlauf zunächst stark an, bleibt dann konstant und fällt schließlich wieder auf Null herab. Dies entspricht beispielsweise der Anforderung einer Verzögerung entlang einer Gefällestrecke. Aufgrund der angeforderten Verzögerung sendet die ECU 17 das Signal 21 an die ECU 19 zur Aktivierung des Generators der Rekuperations-Einrichtung 18. Dabei ist die Rekuperation der Höhe nach einstellbar. Entsprechend folgt die Verzögerung des Anhängefahrzeugs 11 durch den Generator gemäß Kurve C (Verzögerung durch Generator) zunächst ziemlich genau der angeforderten Verzögerung A.

Die Rekuperations-ECU 19 sendet das aktuelle Rekuperations-Bremsmoment zurück an die ECU 17, siehe Signal 23. Aus dem übersandten aktuellen Rekuperations-Bremsmoment und der angeforderten Verzögerung berechnet die ECU 17 den erforderlichen Bremsdruck für die Betriebsbremsen 22. Entsprechend der Kurve D (Verzögerung durch Betriebsbremsen) sind die Betriebsbremsen in einem ersten Zeitabschnitt nicht aktiv bzw. werden nicht angesteuert, weil das Rekuperations-Bremsmoment (noch) ausreicht.

Erst nachdem die Verzögerung durch den Generator (Kurve C) eine bestimmte Höhe erreicht hat und die angeforderte Verzögerung (Kurve A) nicht mehr allein liefern kann, wird zusätzlich eine Verzögerung durch die Betriebsbremsen (Kurve D) eingeleitet. Entsprechend addieren sich die Kurven C und D zur Kurve B.

Im weiteren Zeitverlauf lässt die Verzögerung durch den Generator (Kurve C) nach, insbesondere durch starke Erwärmung. Der Generator kann deshalb nicht mehr so stark belastet werden wie am Anfang und muss unter seinem Maximum bleiben. Entsprechend erhöht die ECU 17 die Verzögerung durch die Betriebsbremsen (Kurve D). Sobald die angeforderte Verzögerung A auf Null zurückgeht, werden auch die Verzögerungen C und D auf Null reduziert.

Im vorliegenden Ausführungsbeispiel wurde von einer pneumatischen Bremsanlage mit elektronischem Bremssystem ausgegangen. Ebenso kann eine hydraulische Bremsanlage vorgesehen sein.

Im vorliegenden Ausführungsbeispiel wird außerdem davon ausgegangen, dass die angeforderte Verzögerung mit der Betätigung eines Retarders als Zusatzbremse im Zugfahrzeug zusammenhängt. Alternativ kann die angeforderte Verzögerung des Anhängefahrzeugs auch aus der Verzögerung des Zugfahrzeugs durch die Betriebsbremse herrühren.

## Patentansprüche

1. Elektronisches Bremssystem (EBS) für ein Anhängefahrzeug (11) mit einer Rekuperations-Einrichtung (18) und zur Steuerung einer Betriebsbremse (22), wobei das EBS bei Anforderung einer Verzögerung durch ein Zugfahrzeug (10) die Rekuperations-Einrichtung (18) und zusätzlich die Betriebsbremse (22) im Anhängefahrzeug (11) ansteuert, insbesondere aufgrund der Betätigung einer Zusatzbremse im Zugfahrzeug (10),
und wobei die Steuerung der Rekuperations-Einrichtung (18) unabhängig vom Bremsmoment der Betriebsbremse (22) erfolgt, indem die Rekuperations-Einrichtung (18) bei Ansteuerung nur ein- oder ausgeschaltet wird.

2. Elektronisches Bremssystem nach Anspruch 1, **gekennzeichnet durch** wenigstens eine Antiblockier-Regelung oder eine Stabilitätsregelung, wobei die Rekuperations-Einrichtung (18) passiv bleibt oder ausgeschaltet wird, wenn die Antiblockier-Regelung oder Stabilitäts-Regelung aktiv sind.

3. Elektronisches Bremssystem nach Anspruch 1 oder 2, **gekennzeichnet durch** ein elektronisches Steuergerät, nämlich eine ECU (17), wobei auch die Rekuperations-Einrichtung (18) eine ECU (19) aufweist, und wobei die beiden ECUs (17,19) über eine Datenverbindung verbunden sind, insbesondere über einen CAN-Bus.

4. Elektronisches Bremssystem nach Anspruch 1 oder einem der weiteren Ansprüche, **dadurch gekennzeichnet, dass** die Rekuperations-Einrichtung (18) in einer Bremsphase aktiv ist, nämlich bei Ansteuerung der Betriebsbremse (22) mit einem Steuerdruck oberhalb eines ersten Schwellwerts, vorzugsweise oberhalb von mindestens 0,7 bar, und dass die Rekuperations-Einrichtung (18) insbesondere auch in einer Bremsbereitschaftsphase aktiv ist, nämlich bei Ansteuerung der Betriebsbremse (22) mit einem Steuerdruck unterhalb des ersten Schwellwerts und oberhalb eines niedrigeren zweiten Schwellwerts von vorzugsweise 0,3 bar.

5. Elektronisches Bremssystem nach Anspruch 1 oder einem der weiteren Ansprüche, **dadurch gekennzeichnet, dass** das Bremsmoment der Rekuperations-Einrichtung (18) vollständig in die Steuerung der Betriebsbremse (22) mit einbezogen wird, so dass ein resultierendes Bremsmoment der Betriebsbremse (22) ein angefordertes Gesamtbremsmoment abzüglich des Rekuperations-Bremsmoments ist.

6. Anhängefahrzeug (11) mit einem elektronischen Bremssystem nach einem der voranstehenden Ansprüche.

7. Anhängefahrzeug (11) nach Anspruch 6, **dadurch gekennzeichnet, dass** die Rekuperations-Einrichtung (18) einen elektrischen Motor/Generator und einen elektrischen Energiespeicher aufweist.

8. Fahrzeugverband mit Zugfahrzeug (10) und mit Anhängefahrzeug (11) nach Anspruch 6 oder 7.

## Claims

1. An electronic brake system (EBS) for a trailer vehicle (11) having a recuperation device (18) and for controlling a service brake (22), wherein, in the event of a request for a delay by a towing vehicle (10), the EBS controls the recuperation device (18) and additionally controls the service brake (22) in the trailer vehicle (11), in particular as a result of the actuation of an additional brake in the towing vehicle (10),
and wherein the control of the recuperation device (18) occurs independently from the braking torque of the service brake (22), by switching the recuperation device (18) only on or off during control.

2. The electronic brake system according to claim 1, **characterized by** at least one anti-lock control or a stability control, wherein the recuperation device (18) remains passive or is switched off when the anti-lock control or stability control are active.

3. The electronic brake system according to claim 1 or 2, **characterized by** an electronic controller, specifically an ECU (17), wherein the recuperation device (18) also has an ECU (19), and wherein the two ECUs (17, 19) are connected via a data connection, in particular a CAN bus.

4. The electronic brake system according to claim 1 or any of the further claims, **characterized in that** the recuperation device (18) is active in a braking phase, specifically during the control of the service brake (22) with a control pressure above a first threshold value, preferably above at least 0.7 bar, and **in that** the recuperation device (18) is in particular also active in a braking readiness phase, specifically during the control of the service brake (22) with a control pressure below the first threshold value and above a lower second threshold value of preferably 0.3 bar.

5. The electronic brake system according to claim 1 or any of the further claims, **characterized in that** the braking torque of the recuperation device (18) is fully included in the control of the service brake (22), so that a resulting braking torque of the service brake (22) is a total requested braking torque minus the recuperation braking torque.

6. A trailer vehicle (11) having an electronic brake system according to any of the foregoing claims.

7. The trailer vehicle (11) according to claim 6, **characterized in that** the recuperation device (18) comprises an electric motor/generator and an electric energy store.

8. A vehicle assembly having a towing vehicle (10) and a trailer vehicle (11) according to claim 6 or 7.

## Revendications

1. Système de freinage électronique (EBS) pour un véhicule tracté (11) avec un dispositif de récupération (18) et pour la commande d'un frein de service (22), dans lequel l'EBS en cas de demande d'une décélération par un véhicule tracteur (10) commande le dispositif de récupération (18) et en plus le frein de service (22) dans le véhicule tracté (11), en particulier en raison de l'actionnement d'un frein additionnel dans le véhicule tracteur (10),
et dans lequel la commande du dispositif de récupération (18) s'effectue indépendamment du couple de freinage du frein de service (22), du fait que le dispositif de récupération (18) lors de la commande est seulement activé ou désactivé.

2. Système de freinage électronique selon la revendication 1, **caractérisé par** au moins une régulation antiblocage ou une régulation de stabilité, dans lequel le dispositif de récupération (18) reste passif ou est désactivé lorsque la régulation antiblocage ou régulation de stabilité sont actives.

3. Système de freinage électronique selon la revendication 1 ou 2, **caractérisé par** un appareil de commande électronique, à savoir un bloc de commande électronique (17), dans lequel le dispositif de récupération (18) présente également un bloc de commande électronique (19), et dans lequel les deux blocs de commande électronique (17, 19) sont reliés par le biais d'une liaison de données, en particulier par l'intermédiaire d'un bus CAN.

4. Système de freinage électronique selon la revendication 1 ou l'une quelconque des autres revendications, **caractérisé en ce que** le dispositif de récupération (18) est actif dans une phase de freinage, à savoir lors de la commande du frein de service (22) avec une pression de commande au-dessus d'une première valeur seuil, de préférence au-dessus d'au moins 0,7 bar, et que le dispositif de récupération (18) est en particulier également actif dans une phase de disponibilité de freinage, à savoir lors de la commande du frein de service (22) avec une pression de commande au-dessous de la première valeur seuil et au-dessus d'une deuxième valeur seuil plus basse de préférence de 0,3 bar.

5. Système de freinage électronique selon la revendication 1 ou l'une quelconque des autres revendications, **caractérisé en ce que** le couple de freinage du dispositif de récupération (18) est entièrement inclus dans la commande du frein de service (22), de sorte qu'un couple de freinage résultant du frein de service (22) est un couple de freinage total demandé moins le couple de freinage de récupération.

6. Véhicule tracté (11) avec un système de freinage électronique selon l'une quelconque des revendications précédentes.

7. Véhicule tracté (11) selon la revendication 6, **caractérisé en ce que** le dispositif de récupération (18) présente un moteur/générateur électrique et un accumulateur d'énergie électrique.

8. Groupement de véhicules avec un véhicule tracteur (10) et avec un véhicule tracté (11) selon la revendication 6 ou 7.
